# EUROPÄISCHE PATENTSCHRIFT

(11) **EP 4 070 003 B1**
(45) Veröffentlichungstag und Bekanntmachung des Hinweises auf die Patenterteilung: **19.11.2025**
(21) Anmeldenummer: 20820851.2
(22) Anmeldetag: 04.12.2020
(51) Int. Cl.: F16L 27/02, F16L 27/08

(54) **MEHRTEILIGES ROHRGELENK**
MULTIPART PIPE JOINT
RACCORD DE TUYAU À PLUSIEURS PARTIES

(30) Priorität: 05.12.2019 DE 102019008446
(43) Veröffentlichungstag der Anmeldung: 12.10.2022
(73) Patentinhaber: PFW Aerospace GmbH, 67346 Speyer (DE)
(72) Erfinder: EITZENBERGER, Berthold, 67071 Ludwigshafen am Rhein (DE)
(74) Vertreter: Gevers & Orès
(86) Internationale Anmeldenummer: PCT/EP2020/084753
(87) Internationale Veröffentlichungsnummer: WO 2021/110982

(56) Entgegenhaltungen:
- WO-A1-2015/039081
- DE-B- 1 162 141
- DE-C- 931 988
- KR-A- 20140 014 491
- US-A- 4 643 463

## Beschreibung

### Technisches Gebiet

Die Erfindung bezieht sich auf ein mehrteiliges Rohrgelenk zur Verbindung von Rohrteilen in Rohrleitungen, das insbesondere in einem Luftfahrzeug eingebaut ist. Des Weiteren bezieht sich die Erfindung auf die Verwendung des mehrteiligen Rohrgelenks in Luftfahrzeugen.

### Stand der Technik

DE 847 538 bezieht sich auf eine ein- oder mehrgelenkige Rohrverbindung für dünnwandige Blechrohre mit Abdichtung gegen inneren Überdruck. Gemäß dieser Lösung ist eine ein- oder mehrgelenkige Rohrverbindung vorgeschlagen, die für dünnwandige Blechrohre mit Abdichtung gegen inneren Überdruck vorgesehen ist. Gemäß dieser Lösung sind die Rohrenden als Kugelschalen ausgebildet. Zwischen den beiden übereinander greifenden Kugelflächen werden nachgiebige, elastische und temperaturbeständige Dichtungsglieder eingelassen, die durch das Einholen der äußeren Kugelflächen oder durch verstellbare Druckglieder dichtend und gleitend angepresst werden. Die Dichtungsglieder sind als Ringe ausgeführt, die auf Press-, Schmiede- oder Gusskörpern angebracht sind, deren Innendurchmesser auf das Innenrohr passt, während die äußere Oberfläche entsprechend dem Innendurchmesser der Außenkugel ballig gestaltet ist.

DE 22 62 775 C3 bezieht sich auf eine gelenkige Rohrverbindung. Diese dient zum Anschluss eines Steigrohrs an ein dazu in einer Winkellage verlaufendes Förderrohr, bei dem es sich um eine Saugfördereinrichtung mit einem Gliederrohr handelt, welches mit dem Förderrohr sowie dem auf einem um eine Drehachse schwenkbaren Halter gelagerten Steigrohr verbunden ist. Der Halter ist Teil eines Gelenke aufweisenden schwenkbaren Rahmens. Die Achsen der Rohrglieder des Gliederrohres miteinander verbindende Schwenklager verlaufen parallel zu den Achsen für am Träger angeordnete Stangen.

DE 10 2006 029 705 A1 bezieht sich auf eine Rohrverbindung und ein Rohrverbindungssystem mit derartigen Rohrverbindungen. Die Rohrverbindung dient zum Verbinden eines ersten Rohres mit einem zweiten Rohr, wobei ein Verbindungsende des ersten Rohres und ein Verbindungsende des zweiten Rohres ein Drehgelenk bilden. Eine Rotationsachse des Drehgelenks und eine Rohrachse des ersten und des zweiten Rohres bilden einen Winkel α. Das erste Rohr ist relativ zum zweiten Rohr von einem ersten Winkel in einen zweiten Winkel verdrehbar.

DE 931 988 C, KR 2014 0014491 A und WO 2015/039081 A1 beziehen sich auf ein mehrteiliges Rohrgelenk zur Verbindung von Rohrteilen mit Anlenkpunkten in einem Axialversatz zueinander.

In Luftfahrzeugen eingesetzte Rohrgelenke in Rohrleitungssystemen sind beispielsweise in Form eines Kardangelenks ausgeführt und umfassen zwei sich in einem Winkel von 90° kreuzende Achsen für die Winkelbewegung. Dadurch ist sichergestellt, dass die Rohrachsen bei jeder Winkelbewegung zueinander in jeder Ausrichtung der Winkelbewegung um die Rohrachsen immer im selben Schnittpunkt beider Rohrachsen aufeinandertreffen. Steht die Rohrleitung unter Innendruck, ergeben sich Zugkräfte, die durch das Kardangelenk übertragen werden müssen. Die Kraftflusslinien, gemäß der die Zugkräfte verlaufen, verlaufen, bedingt durch die sich kreuzenden Achsen für die Winkelbewegung, zwangsläufig durch mehrere 90°-Umlenkungen. Durch diesen Umstand sind die Bauteile des Kardangelenks einer relativ hohen mechanischen Belastung ausgesetzt, wodurch sie aufwendig und schwer gebaut werden müssen. Dies wiederum steht dem angestrebten Erfordernis der Leichtbauweise insbesondere bei Luftfahrtanwendungen entgegen.

### Darstellung der Erfindung

Der Erfindung liegt die Aufgabe zugrunde, ein Rohrgelenk eines Rohrleitungssystems insbesondere in Leichtbauweise auszulegen und so auszubilden, dass dieses in allen möglichen Auslenkungslagen des Rohrgelenks gegen einen im Rohrleitungssystem herrschenden Innendruck abgedichtet ist und andererseits Kraftflusslinien, die bei einer Zugbelastung des Rohrgelenks auftreten, einen mechanisch optimierten Verlauf aufweisen.

Erfindungsgemäß wird ein mehrteiliges Rohrgelenk vorgeschlagen, welches ein Mittelstück aufweist, an dem relativ zu diesem verstellbare Gelenkteile aufgenommen sind. Diese sind an Anlenkpunkten drehfest mit dem Mittelstück verbunden, wobei die Anlenkpunkte der Gelenkteile am Mittelstück gleichzeitig Anlenkpunkte für Übertragungselemente darstellen, die sich axial entlang einer Innenwand des Mittelstücks erstrecken. Durch einen axialen Versatz beider Rohrachsen, d. h. von Mittelteil und Gelenkteil relativ zueinander, kann eine Kraftumlenkung innerhalb des Mittelstücks von 90° auf 45° reduziert werden.

Dadurch wird die Torsionsbelastung des Rohrquerschnitts im Mittelstück reduziert, wodurch der Materialeinsatz und demzufolge das Gewicht reduziert werden kann. Aufgrund des Umstands, dass die Gelenkachsen bildenden einander gegenüberliegenden Anlenkpunkte in einem Axialversatz zueinander ausgeführt sind, können weniger stark umgelenkte Lastflussverläufe bei anliegendem Rohrinnendruck realisiert werden, ferner kann eine daraus resultierende geringere Materialbeanspruchung erreicht werden.

Der erfindungsgemäß vorgeschlagenen Lösung weiter folgend, ist das mehrteilige Rohrgelenk derart ausgeführt, dass die Anlenkpunkte für die Übertragungselemente in Bezug auf einen Umfang des Mittelstücks in 45°-Teilung angeordnet sind. Alternativ besteht die Möglichkeit, die Anlenkpunkte für die Übertragungselemente in Bezug auf den Umfang des Mittelstücks auch in einer anderen Teilung als der erwähnten 45°-Teilung auszuführen.

In Weiterführung der erfindungsgemäß vorgeschlagenen Lösung ist das mehrteilige Rohrgelenk so beschaffen, dass dieses jeweils ein Paar von um 180° zueinander versetzt angeordneter Übertragungselemente mit dem Mittelstück und dem ersten Gelenkteil drehfest an den beiden ersten Anlenkpunkten verbunden sind. Weiterhin ist jeweils ein weiteres Paar von um 180° versetzt zueinander angeordneter Übertragungselemente mit dem Mittelstück und dem zweiten Gelenkteil drehfest an den beiden zweiten Anlenkpunkten verbunden.
In Weiterführung der erfindungsgemäß vorgeschlagenen Lösung ist das mehrteilige Rohrgelenk so beschaffen, dass mehrere Einheiten hintereinander kombiniert werden können, um so einen flexiblen frei beweglichen Verbund zu bilden, der sich mechanisch ähnlich zu einem Schlauch verhält und diese Eigenschaft auf ein ursprünglich starr ausgebildetes Rohrsystem überträgt.

In vorteilhafter Ausführung der erfindungsgemäßen Übertragungselemente sind diese im Wesentlichen laschenförmig ausgeführt und an der Innenwand des Mittelstücks relativ zu diesem verschwenkbar ausgeführt.

In vorteilhafter Weise ist das mehrteilige Rohrgelenk so beschaffen, dass die Gelenkteile an ihren den Rohrenden abgewandten Stirnseiten jeweils eine Aussparung aufweisen. Die Aussparungen haben die Funktion bei einer Relativbewegung der verstellbaren Gelenkteile in Bezug auf das Mittelstück eine Blockade hinsichtlich des Winkelversatzes zu verhindern.

In vorteilhafter Weise sind diese Aussparungen als Rundungen ausgeführt, die sich fertigungstechnisch besonders einfach herstellen lassen.

Das erfindungsgemäß vorgeschlagene mehrteilige Rohrgelenk ist so ausgebildet, dass das Mittelstück des mehrteiligen Rohrgelenks eine mittig in dem Material zu einer Rohrwand ausgeformte umlaufende Sicke aufweist.

Je nach Winkel zwischen der Ebene, die durch die Rohrachsen aufgespannt wird, sowie der Ebenen, in denen die Gelenkachsen liegen, kann der Balg an zwei axialen Positionen im Winkel von 90° mit unterschiedlichen Auslenkungen verformt werden. Die Sicke stützt den Balg bei dynamisch wechselnder Winkelstellung der Rohrachsen verschleißmindernd über den großen Radius der Sicke ab und vermeidet damit eine verschleißverursachende Berührung des Balgs mit den hervorstehenden Elementen der Gelenkachsen. Damit übernimmt die Sicke eine Führungsfunktion. Zudem wird der Querschnitt des Mittelstücks tordiert und zwar auf Grund des Rohrinnendrucks, welcher das mehrteilige Rohrgelenk mit Zugkräften belastet. Durch den Abstand der Gelenkachsen werden die Zugkräfte vermindert, da der Kraftfluss im Querschnitt des Mittelstücks nicht mehr um 90° umgelenkt werden muss, sondern eine Umlenkung nur noch um 45° erfolgt. Der Torsion steht die Sicke im Verbund mit den inneren Laschen, d. h. den Übertragungselementen als geschlossener Querschnitt an den vier Positionen der Lasteinleitung über die Gelenkachsen entgegen. Damit hat die Sicke des Weiteren eine lasttragende Funktion.

In Weiterführung der erfindungsgemäß vorgeschlagenen Lösung sind die Gelenkteile des mehrteiligen Rohrgelenks derart beschaffen, dass diese an ihren den Rohrenden zuweisenden Stirnseiten jeweils eine Durchmesserzunahme aufweisen, die Montageflächen zur Aufnahme eines das mehrteilige Rohrgelenk überziehenden Balgs darstellen. Die Funktion des Balgs liegt darin, eine Abdichtung gegen Innendruck darzustellen. Der Balg ist aufgrund seiner Ausbildung mit Sicken druckstabil, jedoch beweglich genug, um jedem Winkel des mehrteiligen Rohrgelenks zu folgen.

Beim erfindungsgemäß vorgeschlagenen mehrteiligen Rohrgelenk ist das erste Gelenkteil in Bezug auf das Mittelstück um die in einem 180°-Versatz zueinander angeordneten ersten Anlenkpunkte verschwenkbar. Des Weiteren ist das zweite Gelenkteil in Bezug auf das Mittelstück um die in einem 180°-Versatz zueinander angeordneten zweiten Anlenkpunkte verschwenkbar. In bevorzugter Ausführung des mehrteiligen Rohrgelenks beträgt eine minimale Spaltweite in Axialrichtung gesehen zwischen der Stirnseite des ersten Rohrendes und einer dieser gegenüberliegenden Stirnseite des Mittelstücks 3 mm, bevorzugt 1 mm. Eine minimale Spaltweite in Radialrichtung zwischen dem ersten Gelenkteil und einer Außenwand des Mittelstücks beträgt weniger als 1,5 mm, bevorzugt wenige Zehntel Millimeter, besonders bevorzugt 0,2 mm.

In vorteilhafter Weiterbildung des erfindungsgemäß vorgeschlagenen mehrteiligen Rohrgelenks ist im Bereich der Anlenkpunkte des Übertragungselements zwischen einer Außenwand des Mittelstücks und einer Innenwand der relativ zu diesem bewegbaren ersten und zweiten Gelenkteile ein Ring angeordnet. Dieser Ring - oder alternativ Scheibe - stellt einen Abstand zwischen den sich bewegenden Rohrenden und dem Mittelstück sicher, durch welchen eine Beweglichkeit dieser Bauteile zueinander erst ermöglicht wird. Ohne den durch den Ring beziehungsweise die Scheibe definierten Mindestabstand würden sich diese Bauteile berühren und bei Winkelstellung aneinander reiben oder es träte eine Verformung auf. Ist die Scheibe beziehungsweise der Ring aus einem flexiblen Material wie beispielsweise PTFE gefertigt, wird sie bei der Montage eingelegt und passt sich der Krümmung des Rohrdurchmessers von selbst an und dient der Verschleißminderung.

Ist der Ring, beziehungsweise die Scheibe, hingegen aus metallischem Material hergestellt, wird sie an die Krümmung der Rohrenden angepasst und vor der Montage mit den Rohrenden stoffschlüssig verbunden, beispielsweise verschweißt, und mindert damit zusätzlich als verstärkendes Element die Lochleibung sowie die Flächenpressung im Bereich der Gelenkachsen.
Auch können diese beiden Bauweisen für den Ring beziehungsweise die Scheibe kombiniert angewendet werden.

Die Erfindung bezieht sich darüber hinaus auf die Verwendung des mehrteiligen Rohrgelenks in einem Luftfahrzeug zum Starten von mindestens einem Triebwerk sowie zur Beheizung oder Belüftung der Passagierkabine. Im vorliegenden Zusammenhang ist unter einer derartigen Konfiguration von Luftfahrzeugen ein Bleed-Air-System zu verstehen, welches komprimierte und dadurch wärmere Luft aus dem Turbinenverdichter von Strahltriebwerken an den Flügeln zur Klimaanlage des Flugzeugs im Rumpf fördert. Auch besteht die Möglichkeit, über das Bleed-Air-System heiße Abgase eines Hilfstriebwerks, wie es im Heck eines Passagierflugzeugs beispielsweise angeordnet ist, zu den Triebwerken des Flugzeugs zu leiten und diese nacheinander anzulassen. Das Bleed-Air-System verbindet demnach die Antriebsturbinen in den Flügeln mit dem Hilfstriebwerk im Flugzeugheck und der Klimaanlage im Rumpf des Flugzeugs. Die Struktur des Flugzeugs am Übergang von Rumpf zum Flügel ist starken elastischen Verformungen ausgesetzt, denen die normalerweise verbauten Rohre im Bleed-Air-System nicht standhalten. Deswegen werden besonders an diesen Positionen die erfindungsgemäß vorgeschlagenen mehrteiligen Rohrgelenke eingesetzt.

### Vorteile der Erfindung

Durch den axialen Versatz der beiden Rohrachsen um zwei Drehpunkte kann die Kraftumlenkung innerhalb des Mittelstücks von 90° auf 45° reduziert werden. Dadurch wird die Torsionsbelastung des Rohrquerschnitts des Mittelstücks reduziert, wodurch sich dessen Gewicht bei der Auslegung ebenfalls reduzieren lässt. Dies stellt in Bezug auf die Gewichtsersparnis bei Luftfahrzeugen einen entscheidenden Unterschied zwischen Lösungen des Stands der Technik dar und bietet einen Vorteil zu bisherigen Ausführungsvarianten gemäß dem Stand der Technik.

Wird beim erfindungsgemäß vorgeschlagenen mehrteiligen Rohrgelenk eine Auslenkung beider Rohrenden in Bezug auf das Mittelstück von beispielsweise 7° vorgenommen, resultiert daraus ein maximaler Achsversatz der Rohrenden von 7,3 mm bei einem Winkel von 45° jeweils zwischen der Ebene der beiden Rohrachsen, die im maximalen Winkel von 10° zueinander stehen, und den Gelenkachsen. Die erfindungsgemäß vorgeschlagene Lösung kann bei Achsversatz über eine vorgegebene Rotationsposition im Rohrsystem entsprechend den zu erwartenden Auslenkungsebenen des mehrteiligen Rohrgelenks im späteren Betrieb beeinflusst werden. Durch den axialen Versatz der beiden Rohrachsen kann die Kraftumlenkung innerhalb des Mittelstücks von 90° auf 45° reduziert werden. Dadurch wird die Torsionsbelastung des ringförmigen Rohrquerschnitts im Mittelstück reduziert, dadurch kann der Materialeinsatz reduziert und damit kann das Gewicht des erfindungsgemäß vorgeschlagenen mehrteiligen Rohrgelenks ebenfalls reduziert werden. Dies stellt in Bezug auf Luftfahrtanwendungen einen vorteilhaften Unterschied zu bisher eingesetzten, ein höheres Gewicht aufweisenden, Ausführungen dar. Werden beispielsweise die beiden am Mittelstück angelenkten Gelenkteile an ihren dem Mittelstück zuweisenden Enden mit Aussparungen versehen, die bevorzugt als Rundungen ausgeführt werden, so kann eine größere Auslenkung der beiden am Mittelstück angelenkten Gelenkteile erzielt werden, wodurch sich hinsichtlich des Einbaus des erfindungsgemäß vorgeschlagenen Rohrgelenks ein größerer Freiheitsgrad in Anpassung an beengte Bauraumverhältnisse ergibt. Wird des Weiteren das Mittelstück mit einer in seiner Rohrwand ausgeformten umlaufenden Sicke versehen, so kann ein das mehrteilige Rohrgelenk umgebender Balg, insbesondere ein Faltenbalg, bei Auslenkungsbewegungen der Komponenten des mehrteiligen Rohrgelenks flexibel verformt werden. Die umlaufend ausgebildete Sicke stützt den Balg bei dynamisch wechselnder Winkelstellung der Rohrachsen verschleißmindernd über den relativ groß gewählten Sickenradius ab und mindert damit eine verschleißverursachende Berührung des Balgs mit hervorstehenden Elementen der Gelenkachsen an den Anlenkpunkten. Damit hat diese Sicke in vorteilhafter Weise eine Führungsfunktion. Wird der Querschnitt des Mittelstücks einer Torsionsbewegung ausgesetzt, beispielsweise durch den Rohrinnendruck, so ist das mehrteilige Rohrgelenk mit Zugkräften belastet. Durch den Abstand der Gelenkachsen voneinander wird dies deutlich vermindert, da der Kraftfluss im Querschnitt des Mittelstücks nicht mehr um 90° umgelenkt werden muss, sondern nur noch um 45°. Das erfindungsgemäß vorgeschlagene mehrteilige Rohrgelenk zeichnet sich des Weiteren in vorteilhafter Weise dadurch aus, dass zur Verminderung der Reibung und zur Verstärkung der Anlenkpunkte aus Metall gefertigte Ringe oder alternativ eine aus PTFE gefertigte Scheibe als Distanzring eingebaut werden können. Durch diesen wird zwischen der Außenwand des Mittelstücks und der Innenwandung der verstellbaren Gelenkteile Abstand geschaffen, sodass eine Reibung verursachende Bewegung unterbleibt, die Bewegung jedoch als solche zugelassen werden kann.

Der erfindungsgemäß vorgeschlagene Abstand zwischen den Gelenkachsen bringt den weiteren Vorteil mit sich, dass durch die damit verbundene axiale Ausdehnung jedes Kardangelenks, das wenige Rohrgelenke direkt hintereinander zu einem System kombiniert, ein flexibler frei beweglicher Verbund gebildet wird, der sich mechanisch ähnlich zu einem Schlauch verhält. Dessen flexible Eigenschaften werden auf ein ursprünglich starr ausgelegtes Rohrsystem übertragen. Um mit dem erfindungsgemäß vorgeschlagenen mehrteiligen Rohrgelenk die gleiche axiale Länge zu erreichen wie mit Kardangelenken der bisher üblichen Bauweise, werden jedoch weniger Gelenke benötigt, die zudem jedes für sich bereits leichter sind als Kardangelenke in ihrer bisher üblichen Bauart. Beides führt zu einer Reduzierung des Systemgewichts bei Verwendung der erfindungsgemäß vorgeschlagenen Bauweise gegenüber Kardangelenken bisher üblicher Bauweise.

Die maximale Winkelstellung der Rohrachsen in Bezug aufeinander kann durch die erfindungsgemäß vorgeschlagene Lösung erhöht werden, da ein längerer Balg flexibler ist und bessere Dauerfestigkeitseigenschaften aufweist. Die zu erreichende Wechsellastanzahl bei maximalem Auslenkwinkel ist bei Luftfahrtanwendungen für jedes System vorgegeben. Aufgrund des größeren Auslenkwinkels würde eine mögliche Wechsellastanzahl sinken. Durch die größere Flexibilität eines länger ausgebildeten Balgs mit mehr Sicken und dadurch einer geringeren Beanspruchung pro Sicke bei maximaler Auslenkung der Rohrachsen zueinander, würde die Reduzierung einer möglichen Wechsellastanzahl jedoch ausgeglichen und die für jedes System bei Luftfahrtanwendungen vorgegebenen
Werte erreicht und übertroffen.

Durch die erfindungsgemäß vorgeschlagene Lösung kann ein insgesamt geringeres Gewicht erzielt werden. Bei einem axialen Versatz der Gelenkachsen bildenden Anlenkpunkte lassen sich weniger stark umgelenkte Lastflussverläufe im Kardanring bei Anliegen eines Rohrinnendrucks und eine daraus resultierende erheblich verminderte Materialbeanspruchung erreichen.

Als weiterer Vorteil der erfindungsgemäß vorgeschlagenen Lösung ist ins Feld zu führen, dass aufgrund der verlängerten Bauweise durch die axial zueinander versetzten aus den Anlenkpunkten gebildeten Gelenkachsen eine höhere Lastwechselzahl des länger ausgebildeten Balgs bei einem gleichzeitig möglichen größeren maximalen Auslenkwinkel der Rohrachsen zueinander möglich wird.

Die erfindungsgemäß vorgeschlagene Lösung geht ferner mit dem Vorteil einher, dass mehrere mehrteilig ausgebildete Rohrgelenke der erfindungsgemäß vorgeschlagenen Bauart direkt hintereinander gekoppelt werden können, sodass sich ein gewichtsreduziertes Rohrsystem mit einer schlauchartigen Beweglichkeit einstellt, verglichen mit den eher starren, nur geringe Auslenkwinkel zulassenden Rohrsystemen bisheriger Bauart.

### Kurze Beschreibung der Zeichnung

Anhand der Zeichnung wird die Erfindung nachstehend eingehender beschrieben. Es zeigt:
- Figur 1: eine perspektivische Ansicht des erfindungsgemäß vorgeschlagenen mehrteiligen Rohrgelenks in gestreckter Ausführungsvariante,
- Figur 2: einen Längsschnitt durch das erfindungsgemäß vorgeschlagene in gestreckter Position befindliche mehrteilige Rohrgelenk wie in Figur 1 in Perspektive dargestellt,
- Figur 3: das erfindungsgemäß vorgeschlagene mehrteilige Rohrgelenk in einer ersten ausgelenkten Position,
- Figur 4: das erfindungsgemäß vorgeschlagene mehrteilige Rohrgelenk in einer zweiten Ausführung in einer zweiten Position,
- Figur 5: einen Längsschnitt durch das mehrteilige Rohrgelenk in der zweiten Auslenkungsposition gemäß Figur 4,
- Figur 6: eine Einzelteilzeichnung eines verschwenkbaren Gelenkteils mit um 45° zueinander versetzten Anlenkpunkten,
- Figur 6.1: eine perspektivische Darstellung eines flaschenförmig ausgebildeten Übertragungselements und
- Figur 6.2: die Zusammenstellungszeichnung des verschwenkbaren Gelenkteils mit an diesem montierten als Laschen ausgebildeten Übertragungselementen.

### Ausführungsvarianten

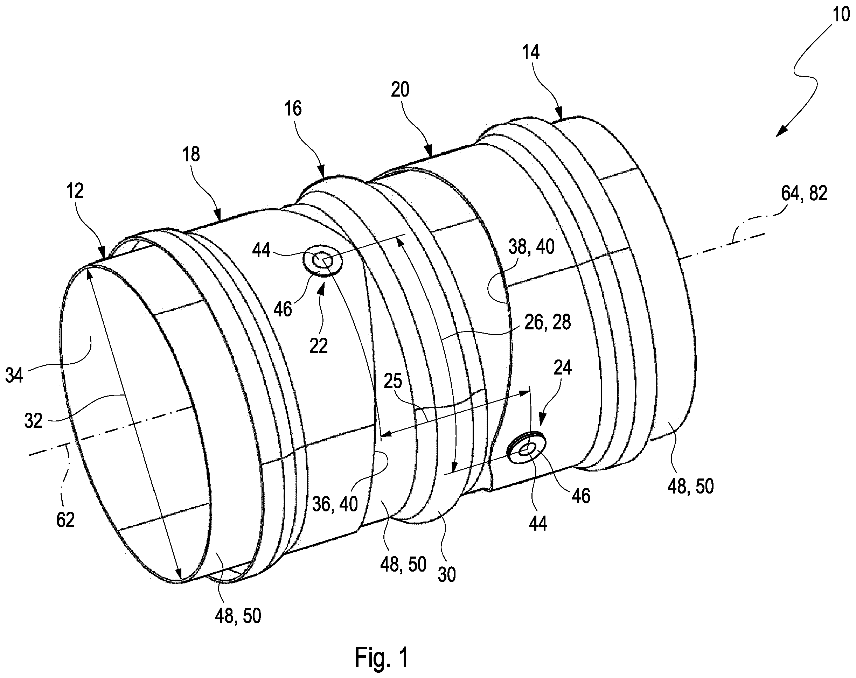

Figur 1 zeigt das erfindungsgemäße mehrteilige Rohrgelenk 10 in einer perspektivischen Ansicht in einer gestreckten Position.

Ein in der perspektivischen Ansicht gemäß Figur 1 dargestelltes mehrteiliges Rohrgelenk 10 umfasst ein Mittelstück 16. Am Mittelstück 16 sind ein erstes Gelenkteil 18 und ein zweites Gelenkteil 20 bewegbar aufgenommen. Das erste Gelenkteil 18 läuft in einem ersten Rohrende 12 aus, während das zweite Gelenkteil 20 im zweiten Rohrende 14 ausläuft. Das erste Gelenkteil 18 ist an ersten Anlenkpunkten 22, die eine Gelenkachse bilden, am Mittelstück 16 bewegbar befestigt. Ein weiterer erster Anlenkpunkt 22 liegt dem in Figur 1 dargestellten ersten Anlenkpunkt 22 um 180° versetzt gegenüber und ist in der Figur 1 nicht dargestellt.

Am Mittelstück 16 ist an zweiten Anlenkpunkten 24, die eine weitere Gelenkachse bilden, das zweite Gelenkteil 20 angelenkt, welches im zweiten Rohrende 14 ausläuft. Dem zweiten Anlenkpunkt 24, der in Figur 1 dargestellt ist, liegt ein in Figur 1 nicht dargestellter zu diesem um 180° versetzter weiterer zweiter Anlenkpunkt 24 gegenüber.

Der perspektivischen Ansicht gemäß Figur 1 ist zu entnehmen, dass zwischen dem ersten Anlenkpunkt 22 und dem zweiten Anlenkpunkt 24 ein Versatz 26 ausgebildet ist, der in dieser Ausführung im Wesentlichen 45° beträgt. Anstelle des in Figur 1 dargestellten Versatzes 26, der 45° beträgt, kann auch ein anderer Winkel als Versatzwinkel 28 gewählt werden.

Mittig am Mittelstück 16 befindet sich in dessen Rohrwand eine umlaufend ausgeformte Sicke 30. Bezugszeichen 32 bezeichnet den Rohrleitungsquerschnitt, der durch eine Innenwand 34 des Mittelstücks 16, des ersten Gelenkteils 18 sowie des zweiten Gelenkteils 20 begrenzt ist.

Die beidseits der mittig in der Wand des Mittelstücks 16 ausgeformten umlaufenden Sicke 30 angeordneten verschwenkbaren Gelenkteile 18, 20 weisen an ihrer der umlaufenden Sicke 30 zuweisenden Seite jeweils eine erste Aussparung 36 sowie eine zweite Aussparung 38 auf. In fertigungstechnisch vorteilhafter Weise sind die erste Aussparung 36 sowie die zweite Aussparung 38 als Rundungen 40 beschaffen.

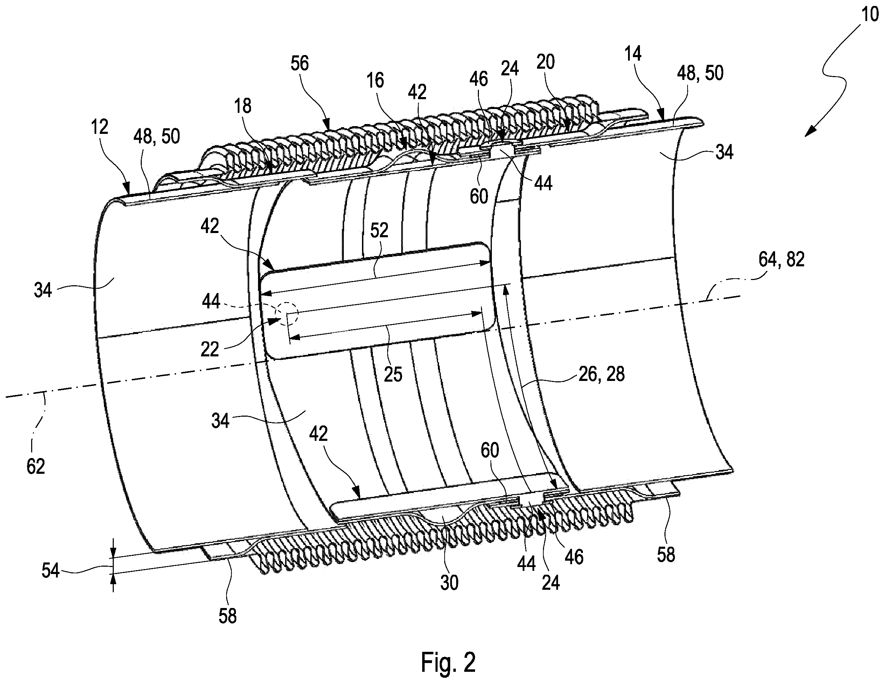

Figur 2 zeigt einen Längsschnitt durch das in Figur 1 in seiner gestreckten Lage dargestellte erfindungsgemäß vorgeschlagene mehrteilige Rohrgelenk 10.

Figur 2 ist zu entnehmen, dass an der Innenwand 34 in Laschenform ausgebildete Übertragungselemente 42 verlaufen. Diese sind jeweils an ersten Anlenkpunkten 22 sowie an zweiten Anlenkpunkten 24 an der Innenseite der Innenwand 34 des Mittelstücks 16 angeordnet. Die in Laschenform ausgebildeten Übertragungselemente 42 sind an Nocken 44 schwenkbar gelagert, wobei die Nocken 44 jeweils Teile der ersten Anlenkpunkte 22 beziehungsweise der zweiten Anlenkpunkte 24 sind. Die ersten Anlenkpunkte 22 sowie die zweiten Anlenkpunkte 24 sind wie bereits im Zusammenhang mit Figur 1 erwähnt, um den Versatzwinkel 28 von beispielsweise 45° zueinander versetzt. Figur 2 zeigt des Weiteren, dass das mehrteilige Rohrgelenk 10 von einem Balg 56, der hier in Schnittdarstellung dargestellt ist, umschlossen wird. Der Balg 56 weist an seinen Enden jeweils Absätze auf, die in einer Durchmesserzunahme 54 ausgeführt sind. Die Durchmesserzunahme 54 bezieht sich auf den Abstand zwischen der Außenwand 48 eines Umfangs 50 und der Innenseite des Balgs 56, der bevorzugt als Faltenbalg ausgebildet ist. In der Mitte wird der Balg 56 von der mittig in der Wand des Mittelstücks 16 ausgeführten umlaufenden Sicke 30 abgestützt. In der geschnittenen Darstellung gemäß Figur 2 ist gezeigt, dass sich das Übertragungselement 42 in seiner Längserstreckung 52 parallel zur Innenwand 34 des Mittelstücks 16 erstreckt. Die Längserstreckung 52 der Übertragungselemente 42 entspricht der Länge des Mittelstücks 16. An dessen Kanten schließen sich die Innenseiten des ersten Gelenkteils 18 beziehungsweise des zweiten Gelenkteils 20 an, bevor sich an diese die ersten Rohrenden 12 beziehungsweise die zweiten Rohrenden 14 anschließen.

Die in der Wand des Mittelstücks 16 ausgebildete umlaufende Sicke 30 stützt den Balg 56 bei dynamisch wechselnder Winkelstellung der Gelenkteile 18, 20 verschleißmindernd über seinen großen Radius ab und vermeidet damit eine verschleißerzeugende Berührung des Balgs 56 mit hervorstehenden Elementen der Gelenkachse, insbesondere einer Scheibe 46 auf der Außenseite der ersten und zweiten Gelenkteile 18, 20. Damit hat die umlaufende Sicke 30 eine Führungsfunktion. Des Weiteren ist festzuhalten, dass der Rohrleitungsquerschnitt 32 des Mittelstücks 16 aufgrund eines in diesem herrschenden Rohrinnendrucks tordiert wird, sodass das mehrteilige Rohrgelenk 10 mit Zugkräften belastet ist. Durch den Abstand der Gelenkachsen, die durch die ersten Anlenkpunkte 22 und die beiden zweiten Anlenkpunkte 24 gebildet sind, werden die Zugkräfte deutlich vermindert, da der Kraftfluss im Querschnitt des Mittelstücks 16 nicht mehr um 90° umgelenkt werden muss, sondern lediglich um 45°. Der Torsionsbeanspruchung steht somit die umlaufende Sicke 30 im Verbund mit den inneren Laschen, d. h. den Übertragungselementen 42 als geschlossener Querschnitt an den vier Positionen der Lasteinleitung, d. h. an den beiden ersten Anlenkpunkten 22 und den beiden zweiten Anlenkpunkten 24 über die Gelenkachsen entgegen. Damit übernimmt die umlaufende Sicke 30 eine lasttragende Funktion.

Der in Figur 2 dargestellte Versatzwinkel 28 des Versatzes 26 beträgt 45°. Dieser Versatz 26 wird lediglich beispielhaft dargestellt. Anstelle des in Figur 2 dargestellten Versatzes 26 von 45° sind auch andere Winkel möglich. Des Weiteren ist der Schnittdarstellung gemäß Figur 2 zu entnehmen, dass an den Nocken 44 - hier beispielsweise an den beiden einander gegenüberliegenden zweiten Anlenkpunkten 24 - neben der Scheibe 46 ein Ring 60 aufgenommen ist. Der Ring 60 stellt einen Abstand zwischen den sich bewegenden Gelenkteilen 18, 20 und dem stationären Mittelstück 16 sicher, wobei durch den Abstand eine Beweglichkeit dieser Bauteile erst möglich wird. Ohne den Ring 60 und den dadurch definierten Mindestabstand würden sich die verschwenkbaren Gelenkteile 18, 20 berühren und bei Winkelstellung reiben oder gar verformen. Der Ring 60 kann auch aus einem flexiblen Material wie beispielsweise PTFE gefertigt werden, bei der Montage eingelegt werden und passt sich dadurch der Krümmung des Rohrdurchmessers von selbst an und dient der Verschleißhemmung. Ist der Ring 60 hingegen aus Metall gefertigt, wird dieser an die Krümmung der verschwenkbaren Gelenkteile 18, 20 angepasst und vor der Montage verschweißt und mindert damit als zusätzlich verstärkendes Element gegen die Lochleibung die Flächenpressung im Bereich der Gelenkachsen der ersten Anlenkpunkte 22 beziehungsweise der zweiten Anlenkpunkte 24, die sich jeweils um 180° versetzt gegenüber liegen.

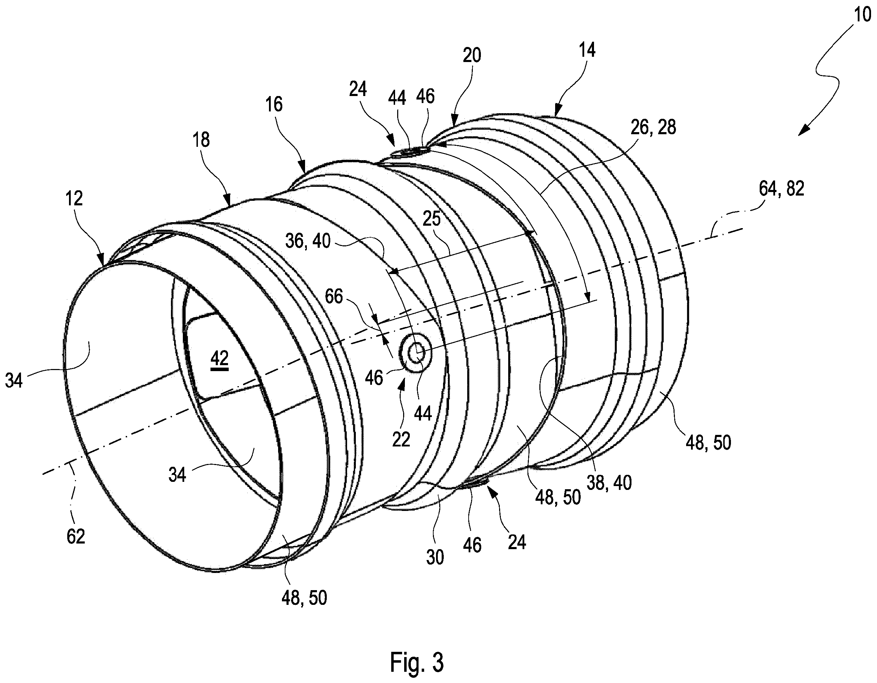

Der perspektivischen Darstellung gemäß Figur 3 ist eine erste Auslenkungssituation des mehrteiligen Rohrgelenks 10 zu entnehmen.

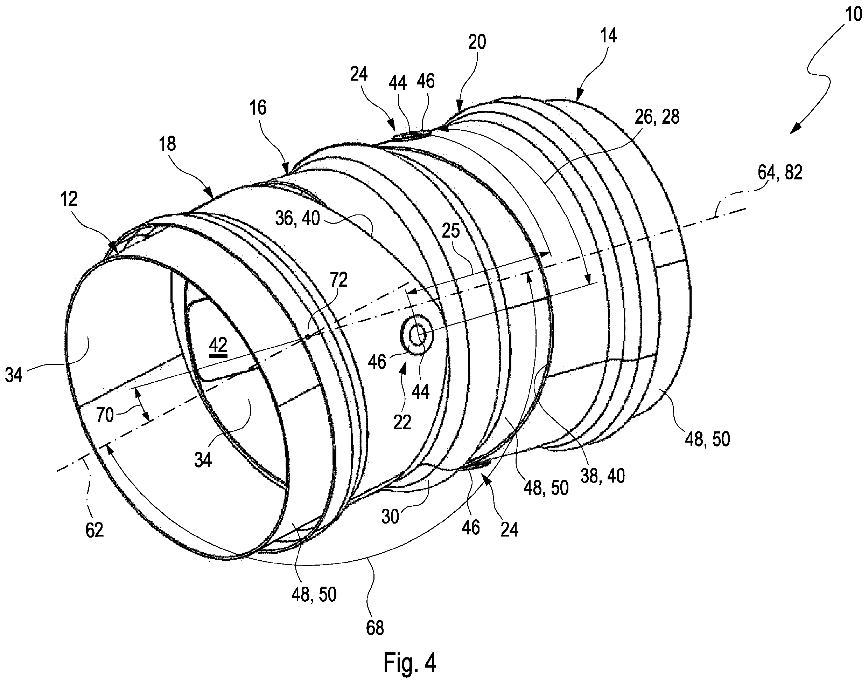

Figur 3 ist zu entnehmen, dass in dieser perspektivischen Darstellung eine Mittelachse 62 des ersten Gelenkteils 18 zu einer Mittelachse 64 des zweiten Gelenkteils 20 einen Achsversatz 66 aufweist. Der Achsversatz 66 beträgt in der Darstellung gemäß Figur 3 ca. 7 mm, wobei die beiden Gelenkteile 18, 20 in Bezug auf das Mittelstück 16 um 7° verschwenkt sind, bei einem Winkel von 45° jeweils zwischen der Ebene der beiden Mittelachsen 62 beziehungsweise 64, die in maximalem Winkel 70 von 10° zueinander stehen und den Gelenkachsen, die durch die beiden ersten Anlenkpunkte 22 und die beiden zweiten Anlenkpunkte 24 gegeben sind. In der Darstellung gemäß Figur 4 reduziert sich dieser Achsversatz 66 auf 0 mm, sobald sich die Ebene der Rohrachsen mit einer der Gelenkachsen, d. h. entweder der Achse, die durch die beiden ersten Anlenkpunkte 22 oder durch die beiden zweiten Anlenkpunkte 24 verläuft, deckt. (Darstellung in Figur 4)

Der Achsversatz 66 kann über eine vorgegebene Rotationsposition im Rohrsystem entsprechend zu den erwarteten Auslenkungsebenen des mehrteiligen Rohrgelenks 10 unter Betriebsbedingungen beeinflusst werden. Wird diese Rotationsposition, d. h. die Einbaulage, nicht bewusst vorgegeben, so beschreibt die Darstellung gemäß Figur 3 den größtmöglichen Achsversatz 66 der beiden Rohrenden 12, 14 der beiden Gelenkteile 18, 20. Das mehrteilige Rohrgelenk 10 ist daraufhin auszulegen, den maximal möglichen Achsversatz 66 ausgleichen zu können.

Der Achsversatz 66 zwischen der Mittelachse 62 und der Mittelachse 64 beträgt in der Darstellung gemäß Figur 3 7,3 mm. Die perspektivische Ansicht gemäß Figur 3 zeigt zudem, dass die sichtbaren der ersten und zweiten Anlenkpunkte 22, 24 in einem Versatzwinkel 28, der einen Versatzbetrag von 45° aufweist, angeordnet sind. Die den dargestellten der beiden Anlenkpunkte 22, 24 gegenüberliegenden Anlenkpunkte sind um 180° zu den dargestellten ersten und zweiten Anlenkpunkten 22, 24 versetzt angeordnet und daher nicht gezeigt.

Während das erste Gelenkteil 18 um die beiden um 180° zueinander versetzt angeordneten ersten Anlenkpunkte 22 bewegt werden kann, wie in Figur 3 dargestellt ist, bewegt sich das zweite Gelenkteil 20 um die beiden zweiten Anlenkpunkte 24, die in der Darstellung gemäß Figur 3 einander um 180° gegenüber liegen. Dies bedeutet, dass die jeweiligen Bewegungsebenen der beiden Gelenkteile 18 und 20 um 45° zueinander versetzt orientiert sind. Anstelle eines Versatzwertes von 45° - wie in Figur 3 dargestellt - könnte auch ein anderer Versatz 26 gewählt werden, beispielsweise 30°, 40°, 50° oder auch 60°. In allen Fällen ist mit dem erfindungsgemäß vorgeschlagenen mehrteiligen Rohrgelenk 10 eine erhebliche Reduzierung der mechanischen Belastungen der Bauteile des mehrteiligen Rohrgelenks 10 verbunden.

Der Vollständigkeit halber sei erwähnt, dass in der perspektivischen Ansicht gemäß Figur 3, die das mehrteilige Rohrgelenk 10 in einer ersten Auslenkungsposition wiedergibt, die die Übertragungselemente 42 darstellenden Laschen sich parallel zur Innenwand 34 des Mittelstücks 16 des mehrteiligen Rohrgelenks 10 erstrecken. Die Übertragungselemente 42 sind über die Nocken 44 an jedem der ersten Anlenkpunkte 22 beziehungsweise an jedem der zweiten Anlenkpunkte 24 befestigt und relativ zur Innenwand 34 verschwenkbar angeordnet.

Figur 4 zeigt eine zweite Auslenkungsposition des mehrteiligen Rohrgelenks 10.

Aus der Darstellung gemäß Figur 4 geht hervor, dass in der dort dargestellten zweiten Auslenkungsposition der Komponenten des mehrteiligen Rohrgelenks 10 zwischen der Mittelachse 62 des ersten Gelenkteils 18 und der Mittelachse 64 des zweiten Gelenkteils 20 ein 170°-Winkel eingeschlossen ist, vergleiche Bezugszeichen 68. Die Distanz 72 der Mittelachsen 62, 64 liegt bei 0 mm, der Winkel 70 beträgt 10°. Analog zur Darstellung gemäß Figur 3, die die erste Auslenkungsposition der Komponenten des mehrteiligen Rohrgelenks 10 zeigt, ist auch in der Darstellung gemäß Figur 4 aus Gründen der Darstellbarkeit der Balg 56 weggelassen.

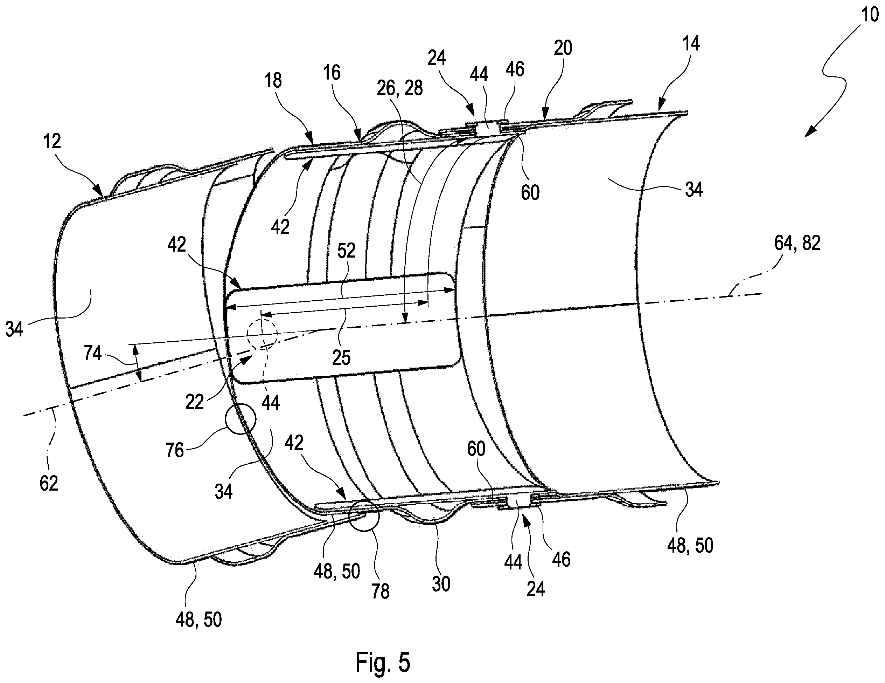

Der Darstellung gemäß Figur 5 ist ein weiterer Schnitt durch das erfindungsgemäß vorgeschlagene mehrteilige Rohrgelenk 10 zu entnehmen, dessen Auslenkungsposition gemäß Figur 5 identisch mit derjenigen in Figur 4 ist.

Figur 5 zeigt, dass das Mittelstück 16 in seiner Mantelfläche, welche eine Innenwand 34 umfasst, die umlaufende Sicke 30 aufweist. In der Schnittdarstellung gemäß Figur 5 dargestellten einander um 180° zueinander versetzt gegenüberliegenden beiden zweiten Anlenkpunkten 24 ist das zweite Gelenkteil 20 aufgenommen, welches sich in Bezug auf die Mittelachse 82 des Mittelstücks 16 in einer gestreckten, d. h. nicht angewinkelten Lage in Bezug auf das Mittelstück 16 befindet. Wie Figur 5 zeigt, sind an den beiden einander gegenüberliegenden zweiten Anlenkpunkten 24 an den laschenförmig ausgebildeten Übertragungselementen 42 die Nocken 44 ausgeführt. In den Nocken 44 ist einerseits ein Ring 60 zur Reibungsverminderung aufgenommen sowie auf der Außenseite der Nocken 44 jeweils die Scheibe 46. Die laschenförmig ausgebildeten Übertragungselemente 42 sind in der Längserstreckung 52 ausgeführt.

Im Gegensatz zur nicht ausgelenkten Position des zweiten Gelenkteils 20 in Bezug auf das Mittelstück 16 befindet sich das erste Gelenkteil 18 in einer abgewinkelten Lage in Bezug auf das Mittelstück 16. Dies geht aus einem Winkel hervor, der einen 10°-Versatz 74 zwischen der Mittelachse 82 des Mittelstücks 16 und der Mittelachse 62 des ersten Gelenkteils 18 bezeichnet. Der in Figur 5 dargestellte Versatz 74 beträgt 10°. Aus der in der Schnittdarstellung gemäß Figur 5 dargestellten abgewinkelten Lage des ersten Gelenkteils 18 in Bezug auf das Mittelstück 16 ergibt sich eine Spaltweite 1, vergleiche Position 76, die 1 mm beträgt und die sich in der in Figur 5 dargestellten ausgelenkten Lage des ersten Gelenkteils 18 zwischen den beiden aneinander gegenüberliegenden Stirnseiten des Mittelstücks 16 einerseits sowie des ausgelenkt dargestellten ersten Gelenkteils 18 andererseits einstellt. Des Weiteren stellt sich eine Spaltweite 2 in der Größenordnung von wenigen Zehnteln Millimeter, bevorzugt 0,2 mm, vergleiche Position 78, zwischen der Mantelfläche des ersten Gelenkteils 18 und der Außenwand 48 des Mittelstücks 16 ein. Die in Figur 5 dargestellten Spaltweiten 1 und 2, vergleiche Positionen 76 und 78, stellen sich bei ausgelenkter Lage des ersten Gelenkteils 18 in Bezug auf das ortsfeste, stationär angeordnete, Mittelstück 16, insbesondere bei einem maximal zulässigen Winkelausgleich, ein.

Wenn die Rohrachsen der beiden Gelenkteile 18, 20 in einem Winkel zueinander ausgelenkt werden, so definieren sie eine Ebene. Zu dieser Ebene haben die Gelenkachsen, die durch die einander gegenüberliegenden Anlenkpunkte 22, 24 gebildet werden und die zueinander um 90° verdreht sind, einen Winkel der Rotation. Dabei stellen sich zwei Extrempositionen der Rotation von 45°/45° und von 0°/90° der beiden Gelenkachsen bezogen auf die Ebene der Rohrachse und jeden Winkel dazwischen ein. Bei einer Rotation von 0°/90° ergibt sich ein axialer Versatz der Rohrachsen von 0,0 mm bei einer maximalen Winkelstellung 70 von 10° der Rohrachsen zueinander. Bei der Extremposition 45°/45° ergibt sich ein axialer Versatz der Rohrachsen von 7,3 mm bei einer maximalen Winkelstellung 70 von 10° der Rohrachsen zueinander.

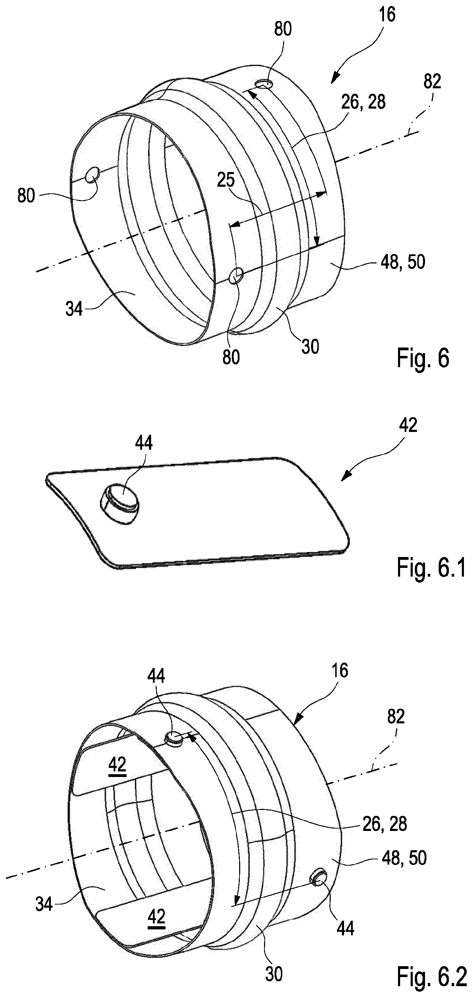

Die Figuren 6, 6.1 und 6.2 zeigen die Fertigungs- beziehungsweise Montageschritte des Mittelstücks 16 des erfindungsgemäß vorgeschlagenen mehrteiligen Rohrgelenks 10.

Figur 6 zeigt das Mittelstück 16, an dessen Umfang 50 einander gegenüberliegend Bohrungen 80 ausgebildet sind, welche die Aufnahmen beispielsweise für die Nocken 44 der laschenförmig ausgebildeten Übertragungselemente 42 aufweisen. Die Bohrungen 80 mit den darin aufgenommen Nocken 44 der laschenförmig ausgeführten Übertragungselemente 42 stellen die beiden einander um 180° versetzt gegenüberliegenden ersten Anlenkpunkte 22 dar. Jenseits der mittig im Mittelstück 16 verlaufenden, umlaufenden Sicke 30 sind in analoger Weise in einem Versatz 26, der in einem Versatzwinkel 28 von beispielsweise 45° ausgeführt sein kann. Es bestehen Alternativen der Gestalt, dass andere Versatzwinkel 28 gewählt werden können, so beispielsweise 30°, 40°, 50° oder 60°, um die Kraftflusslinien zu optimieren. Die Bohrungen 80 sind im in Figur 6 dargestellten Schema in der Außenwand 48 des rohrförmigen Mittelstücks 16 eingebracht. Figur 6.1 zeigt in perspektivischer Ansicht, dass in seiner Einbaulage sich an die Innenwand 34 des Mittelstücks 16 anschmiegende Übertragungselement 42. Dieses umfasst an einem Ende die Nocken 44, die in die Bohrung 80 eingepasst sind und durch die Scheibe 46 gesichert werden.

Die Figur 6.2 zeigt das Übertragungselement 42, dessen Nocken 44 in die Bohrungen 80 des Mittelstücks 16 eingepresst sind. Figur 6.2 entspricht der Darstellung in Figur 6, wonach die einzelnen Bohrungen 80 zur Aufnahme der Nocken 44 der laschenförmig ausgebildeten Übertragungselemente 42 in Bezug aufeinander und den Versatz 26 im Versatzwinkel 28 versetzt sind. Durch die jeweils einander gegenüberliegenden beiden ersten Anlenkpunkten 22 wird eine Gelenkachse gebildet; eine weitere Gelenkachse wird durch die beiden einander gegenüberliegenden zweiten Anlenkpunkte 24 dargestellt. Analog zur Darstellung gemäß Figur 6 verläuft mittig in der Außenwand 48 das Mittelstück 16, die umlaufende Sicke 30, die der Abstützung des in Figur 2 geschnitten dargestellten Balgs 56 dient.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

10 mehrteiliges Rohrgelenk
12 erstes Rohrende
14 zweites Rohrende
16 Mittelstück
18 erstes Gelenkteil
20 zweites Gelenkteil
22 erster Anlenkpunkt
24 zweiter Anlenkpunkt
25 Axialversatz
26 Versatz (45°)
28 Versatzwinkel
30 umlaufende Sicke
32 Rohrleitungsquerschnitt
34 Innenwand
36 erste Aussparung
38 zweite Aussparung
40 Rundung
42 Übertragungselement
44 Nocken
46 Scheibe
48 Außenwand
50 Umfang
52 Längserstreckung Übertragungselement
54 Durchmesserzunahme
56 Balg
60 Ring
62 Mittelachse erstes Gelenkteil
64 Mittelachse zweites Gelenkteil
66 Versatz der Mittelachsen
68 170°-Winkel
70 10°-Winkel
72 0-Distanz
74 10°-Versatz
76 Spaltweite 1 (1,0 mm)
78 Spaltweite 2 (0,2 mm)
80 Bohrung für Nocken
82 Mittelachse Mittelstück

## Patentansprüche

1. Mehrteiliges Rohrgelenk (10), umfassend:
- ein Mittelstück (16),
- ein erstes und ein zweites Gelenkteile (18, 20), die an dem Mittelstück (16) aufgenommen sind, wobei die Gelenkteile (18, 20) relativ zu dem Mittelstück (16) verstellbar sind und an Anlenkpunkten (22, 24) drehfest mit dem Mittelstück (16) verbunden sind,
- Übertragungselemente (42), und
- ein Balg (56), der das Mittelstück (16) umgibt, wobei die Anlenkpunkte (22, 24) der Gelenkteile (18, 20) am Mittelstück (16) gleichzeitig Anlenkpunkte (22, 24) für die Übertragungselemente (42) darstellen, die sich axial entlang einer Innenwand (34) des Mittelstücks (16) erstrecken, wobei die Gelenkachsen bildenden Anlenkpunkte (22, 24) in einem Axialversatz (25) zueinander angeordnet sind, **dadurch gekennzeichnet, dass** das Mittelstück (16) eine mittig in seiner Rohrwand ausgeformte, umlaufende Sicke (30) aufweist, die in Bezug auf den Balg (56) eine verschleißmindernde Führungsfunktion und in Bezug auf eine Torsion des Mittelstücks (16) eine lasttragende Funktion ausübt.

2. Mehrteiliges Rohrgelenk (10) gemäß Anspruch 1, **dadurch gekennzeichnet, dass** Anlenkpunkte (22, 24) für die Übertragungselemente (42) in Bezug auf einen Umfang (50) des Mittelstücks (16) in einem Versatz (26) um einen Versatzwinkel (28) versetzt zueinander angeordnet sind.

3. Mehrteiliges Rohrgelenk (10) gemäß Anspruch 2, **dadurch gekennzeichnet, dass** jeweils ein Paar von 180° versetzt zueinander angeordneter Übertragungselemente (42) mit dem Mittelstück (16) und dem ersten Gelenkteil (18) drehfest an ersten Anlenkpunkten (22) verbunden sind.

4. Mehrteiliges Rohrgelenk (10), gemäß Anspruch 2, **dadurch gekennzeichnet, dass** jeweils ein Paar von 180° versetzt zueinander angeordneter Übertragungselemente (42) mit dem Mittelstück (16) und dem zweiten Gelenkteil (20) drehfest an zweiten Anlenkpunkten (24) verbunden sind.

5. Mehrteiliges Rohrgelenk (10) gemäß Anspruch 2, **dadurch gekennzeichnet, dass** die Übertragungselemente (42) im Wesentlichen laschenförmig ausgeführt, an der Innenwand (34) des Mittelstücks (16) verschwenkbar sind.

6. Mehrteiliges Rohrgelenk (10) gemäß Anspruch 1, **dadurch gekennzeichnet, dass** die Gelenkteile (18, 20) an ihren den Rohrenden (12, 14) abgewandten Stirnseiten jeweils eine Aussparung (36, 38) aufweisen.

7. Mehrteiliges Rohrgelenk (10) gemäß Anspruch 6, **dadurch gekennzeichnet, dass** die Aussparungen (36, 38) jeweils als Rundung (40) ausgeführt sind.

8. Mehrteiliges Rohrgelenk (10) gemäß Anspruch 1, **dadurch gekennzeichnet, dass** die Gelenkteile (18, 20) an ihren den Rohrenden (12, 14) zuweisenden Stirnseiten jeweils eine Durchmesserzunahme (54) aufweisen, die Montageflächen zur Aufnahme eines das mehrteilige Rohrgelenk (10) überziehenden Balgs (56) darstellen.

9. Mehrteiliges Rohrgelenk (10) gemäß Anspruch 3, **dadurch gekennzeichnet, dass** das erste Gelenkteil (18) in Bezug auf das Mittelstück (16) und die in einem 180°-Versatz zueinander angeordneten ersten Anlenkpunkte (22) verschwenkbar ist.

10. Mehrteiliges Rohrgelenk (10) gemäß Anspruch 4, **dadurch gekennzeichnet, dass** das zweite Gelenkteil (20) in Bezug auf das Mittelstück (16) um die in einem 180°-Versatz angeordneten zweiten Anlenkpunkte (24) verschwenkbar ist.

11. Mehrteiliges Rohrgelenk (10) gemäß Anspruch 1, **dadurch gekennzeichnet, dass** bei maximal zulässigem Winkelausgleich eine minimale Spaltweite 1 (76) in Axialrichtung zwischen der Stirnseite des ersten Rohrendes (12) und einer dieser gegenüberliegenden Stirnseite des Mittelstücks (16) 3 mm, bevorzugt 1 mm, beträgt.

12. Mehrteiliges Rohrgelenk (10) gemäß Anspruch 1, **dadurch gekennzeichnet, dass** bei maximal zulässigem Winkelausgleich eine minimale Spaltweite 2 (78) in Radialrichtung zwischen dem ersten Gelenkteil (18) und einer Außenwand (48) des Mittelstücks (16) weniger als 1,5 mm, bevorzugt wenige Zehntel Millimeter, besonders bevorzugt 0,2 mm beträgt.

13. Mehrteiliges Rohrgelenk (10) gemäß Anspruch 1, **dadurch gekennzeichnet, dass** im Bereich der Anlenkpunkte (22, 24) des Übertragungselements (42) zwischen einer Außenwand (48) des Mittelstücks (16) und einer Innenwand (34) der ersten und zweiten Gelenkteile (18, 20) ein Ring (60) angeordnet ist, der einen Abstand zwischen dem Mittelstück (16) und den Gelenkteilen (18, 20) einerseits herbeiführt und andererseits als verstärkendes Element hinsichtlich von Flächenpressungen im Bereich der Anlenkpunkte (22, 24) dient.

14. Verwendung des mehrteiligen Rohrgelenks (10) gemäß einem der vorstehenden Ansprüche in einem Luftversorgungssystem für Luftfahrzeuge zum Anlassen der Triebwerke und/oder zur Versorgung der Passagierkabine.

## Claims

1. Multipart pipe joint (10) comprising:
- a centre piece (16),
- a first and a second joint parts (18, 20) which are received on the centre piece (16), the joint parts (18, 20) being adjustable relative to the centre piece and which are rotationally fixedly connected to the centre piece (16) at articulation points (22, 24),
- transmission elements (42), and
- a bellows (56) which surrounds the centre piece (16), wherein the articulation points (22, 24) of the joint parts (18, 20) on the centre piece (16) simultaneously constitute articulation points (22, 24) for transmission elements (42) which extend axially along an inner wall (34) of the centre piece (16), the articulation points (22, 24) forming articulation axes being arranged in an axial offset (25) relative to one another, **characterized in that** the centre piece (16) has a circumferential crease (30) formed centrally in its pipe wall, which performs a wear-reducing guide function with respect to a bellows (56) and a load-bearing function with respect to torsion of the centre piece (16).

2. Multipart pipe joint (10) according to claim 1, **characterised in that** articulation points (22, 24) for the transmission elements (42) are arranged offset from one another in an offset (26) by an offset angle (28) with respect to a circumference (50) of the centre piece (16).

3. Multipart pipe joint (10) according to claim 2, **characterised in that** in each case a pair of transmission elements (42) offset by 180° relative to one another are rotationally fixedly connected to the centre piece (16) and the first joint part (18) at first articulation points (22).

4. Multipart pipe joint (10) according to claim 2, **characterised in that** in each case a pair of transmission elements (42) arranged offset by 180° relative to one another are rotationally fixedly connected to the centre piece (16) and the second joint part (20) at second articulation points (24).

5. Multipart pipe joint (10) according to claim 2, **characterised in that** the transmission elements (42) are substantially tab-shaped and pivotable on the inner wall (34) of the centre piece (16).

6. Multipart pipe joint (10) according to claim 1, **characterised in that** the joint parts (18, 20) each have a recess (36, 38) on their end faces facing away from the pipe ends (12, 14).

7. Multipart pipe joint (10) according to claim 6, **characterised in that** the recesses (36, 38) are each designed as a rounded portion (40).

8. Multipart pipe joint (10) according to claim 1, **characterised in that** the joint parts (18, 20) each have a diameter increase (54) on their end faces facing the pipe ends (12, 14), which respectively constitute mounting surfaces for receiving a bellows (56) covering the multipart pipe joint (10).

9. Multipart pipe joint (10) according to claim 3, **characterised in that** the first joint part (18) is pivotable with respect to the centre piece (16) and the first articulation points (22) arranged at an offset of 180° to one another.

10. Multipart pipe joint (10) according to claim 4, **characterised in that** the second joint part (20) is pivotable with respect to the centre piece (16) about the second articulation points (24) arranged in a 180° offset.

11. Multipart pipe joint (10) according to claim 1, **characterised in that**, with maximum permissible angular compensation, a minimum gap width 1 (76) in the axial direction between the end face of the first pipe end (12) and an end face of the centre piece (16) opposite thereto is 3 mm, preferably 1 mm.

12. Multipart pipe joint (10) according to claim 1, **characterised in that**, with maximum permissible angular compensation, a minimum gap width 2 (78) in the radial direction between the first joint part (18) and an outer wall (48) of the centre piece (16) is less than 1.5 mm, preferably a few tenths of a millimetre, most preferably 0.2 mm.

13. Multipart pipe joint (10) according to claim 1, **characterised in that** in the region of the articulation points (22, 24) of the transmission element (42) between an outer wall (48) of the centre piece (16) and an inner wall (34) of the first and second joint parts (18, 20) there is arranged a ring (60) which on the one hand brings about a spacing between the centre piece (16) and the joint parts (18, 20) and on the other hand serves as a reinforcing element with respect to surface pressures in the region of the articulation points (22, 24).

14. Use of the multipart pipe joint (10) according to one of the preceding claims in an air supply system for aircraft for starting the engines and/or for supplying the passenger cabin.

## Revendications

1. Articulation tubulaire en plusieurs parties (10), comprenant :
- une pièce centrale (16),
- une première et une seconde pièces articulées (18, 20) qui sont logées au niveau de la pièce centrale (16), les pièces articulées (18, 20) étant réglables par rapport à la pièce centrale (16) et sont reliées de manière fixe en rotation au niveau de points d'articulation (22, 24) à la pièce centrale (16).
- des éléments de transmission (42), et
- un soufflet (56) qui entoure la pièce centrale (16), les points d'articulation (22, 24) des pièces articulées (18, 20) représentant au niveau de la pièce centrale (16) simultanément des points d'articulation (22, 24) pour les éléments de transmission (42) qui s'étendent axialement le long d'une paroi interne (34) de la pièce centrale (16), les points d'articulation (22, 24) formant des axes d'articulation étant disposés les uns par rapport aux autres dans un décalage axial (25), **caractérisée en ce que** la pièce centrale (16) présente un pli périphérique (30) formé au centre dans sa paroi tubulaire, lequel exerce sur le soufflet (56) une fonction de guidage réduisant l'usure et une fonction de support de charge par rapport à une torsion de la pièce centrale (16).

2. Articulation tubulaire en plusieurs parties (10) selon la revendication 1, **caractérisée en ce que** des points d'articulation (22, 24) pour les éléments de transmission (42) sont disposés les uns par rapport aux autres par rapport à une portée (50) de la pièce centrale (16) dans un décalage (26) autour d'un angle de décalage (28).

3. Articulation tubulaire en plusieurs parties (10) selon la revendication 2, **caractérisée en ce que** respectivement une paire d'éléments de transmission (42) disposés avec un décalage de 180 ° l'un par rapport à l'autre sont reliés à la pièce centrale (16) et à la pièce articulée (18).

4. Articulation tubulaire en plusieurs parties (10) selon la revendication 2, **caractérisée en ce que** respectivement une paire d'éléments de transmission (42) disposés avec un décalage de 180 ° l'un par rapport à l'autre sont reliés à la pièce centrale (16) et à la seconde pièce articulée (20) de manière fixe en rotation au niveau de deux points d'articulation (24).

5. Articulation tubulaire en plusieurs parties (10) selon la revendication 2, **caractérisée en ce que** les éléments de transmission (42) sont réalisés pour l'essentiel en forme de languette et peuvent pivoter au niveau de la paroi interne (34) de la pièce centrale (16).

6. Articulation tubulaire en plusieurs parties (10) selon la revendication 1, **caractérisée en ce que** les pièces articulées (18, 20) présentent respectivement un évidement (36, 38) au niveau de leurs faces frontales opposées aux extrémités tubulaires (12, 14).

7. Articulation tubulaire en plusieurs parties (10) selon la revendication 6, **caractérisée en ce que** les évidements (36, 38) sont respectivement réalisés en tant qu'arrondi (40).

8. Articulation tubulaire en plusieurs parties (10) selon la revendication 1, **caractérisée en ce que** les pièces d'articulation (18, 20) présentent au niveau de leurs faces frontales orientées vers les extrémités tubulaires (12, 14) respectivement une augmentation de diamètre (54) qui représentent des surfaces de montage destinées au logement d'un soufflet (56) recouvrant l'articulation tubulaire en plusieurs parties (10).

9. Articulation tubulaire en plusieurs parties (10) selon la revendication 3, **caractérisée en ce que** la première pièce articulée (18) peut pivoter par rapport à la pièce centrale (16) et des premiers points d'articulation (22) disposés les uns par rapport aux autres dans un décalage de 180 °.

10. Articulation tubulaire en plusieurs parties (10) selon la revendication 4, **caractérisée en ce que** la seconde pièce articulée (20) peut pivoter par rapport à la pièce centrale (16) autour des seconds points d'articulation (24) disposés dans un décalage de 180 °.

11. Articulation tubulaire en plusieurs parties (10) selon la revendication 1, **caractérisée en ce que**, dans le cas d'une compensation angulaire maximale admissible, un écartement minimal 1 (76) dans la direction axiale entre la face frontale de la première extrémité tubulaire (12) et une face avant opposée de la pièce centrale (16) est de 3 mm, de préférence de 1 mm.

12. Articulation tubulaire en plusieurs parties (10) selon la revendication 1, **caractérisée en ce que**, dans le cas d'une compensation angulaire maximale admissible, un écartement minimal 2 (78) dans la direction radiale entre la première partie articulée (18) et une paroi externe (48) de la pièce centrale (16) est inférieur à 1,5 mm, de préférence à quelques dixièmes de millimètre, et de manière particulièrement préférée à 0,2 mm.

13. Articulation tubulaire en plusieurs parties (10) selon la revendication 1, **caractérisée en ce qu'**un anneau (60) est disposé dans la zone des points d'articulation (22, 24) de l'élément de transmission (42) entre une paroi externe (48) de la pièce centrale (16) et une paroi interne (34) des première et seconde parties articulées (18, 20), lequel anneau crée d'une part un écart entre la pièce centrale (16) et les parties articulées (18, 20) d'une part, et, d'autre part, sert d'élément de renfort contre les pressions superficielles dans la zone des points d'articulation (22, 24).

14. Utilisation de l'articulation tubulaire en plusieurs parties (10) selon l'une quelconque des revendications précédentes dans un système d'alimentation en air pour des véhicules aériens pour le démarrage des moteurs et/ou l'alimentation de la cabine passagers.
